# EUROPÄISCHE PATENTSCHRIFT

(11) **EP 0 478 644 B1**
(45) Veröffentlichungstag und Bekanntmachung des Hinweises auf die Patenterteilung: **03.05.1995**
(21) Anmeldenummer: 90909674.5
(22) Anmeldetag: 19.06.1990
(51) Int. Cl.: F23C 11/00, F23G 7/06, F23C 9/00, F01N 3/20

(54) **VERFAHREN UND VORRICHTUNG ZUR ERZEUGUNG VON WÄRME DURCH FLAMMLOSE VERBRENNUNG EINES BRENNSTOFFES IN EINEM GASSTROM**
PROCESS AND DEVICE FOR GENERATING HEAT THROUGH THE FLAMELESS BURNING OF A FUEL IN A GAS CURRENT
PROCEDE ET DISPOSITIF POUR LA PRODUCTION DE CHALEUR PAR COMBUSTION SANS FLAMME D'UN CARBURANT DANS UN FLUX DE GAZ

(30) Priorität: 20.06.1989 DE 3920159; 07.11.1989 DE 8913184 U; 08.03.1990 DE 9002743 U
(43) Veröffentlichungstag der Anmeldung: 08.04.1992
(73) Patentinhaber: Emitec Gesellschaft für Emissionstechnologie mbH, 53797 Lohmar (DE)
(72) Erfinder: MAUS, Wolfgang, D-5060 Bergisch Gladbach 1 (DE); SWARS, Helmut, D-5060 Bergisch Gladbach 1 (DE); PÜTZ, Heinrich, D-5203 Much (DE); JÄGER, Walter, D-5250 Engelskirchen (DE)
(74) Vertreter: Kahlhöfer, Hermann, Dipl.-Phys.
(86) Internationale Anmeldenummer: EP9000966
(87) Internationale Veröffentlichungsnummer: WO9015955

(56) Entgegenhaltungen:
- EP-A- 0 287 923
- GB-A- 775 549
- GB-A- 2 074 889
- US-A- 3 314 159
- US-A- 3 699 683
- ASHRAE JOURNAL, vol. 15, no. 5, Mai 1973, NEW YORK US Seiten 43 - 45; John E. Yocom: "Incineration of gases and vapors"
- PATENT ABSTRACTS OF JAPAN, vol. 7, no. 221 (M-246) (1366) 30 September 1983 & JP-A-58 115216 (NIPPON SHOKUBAI KAGUKU KOGYO KK) 8. Juli 1983

## Beschreibung

Die Erfindung betrifft ein Verfahren zur Erzeugung von Wärme durch flammlose Verbrennung eines Brennstoffes in einem sauerstoffhaltigen Gasstrom sowie eine Vorrichtung zur Durchführung des Verfahrens, wobei die bei der Verbrennung erzeugte Wärme in eine von dem Gasstrom durchströmbare und/oder umströmbare Komponente einzubringen ist.

Entsprechende Verfahren und Vorrichtungen finden vielfältige Anwendungen, namentlich zur Aufheizung von Wärmeträgerfluiden wie Wasser oder Luft im Rahmen von Heizanlagen für Kraftfahrzeuge, große Hallen oder dergleichen, sowie zur Aufheizung von Wabenkörpern in Abgassystemen von Kraftfahrzeugen, die mit katalytisch aktiven Beschichtungen zur Umsetzung von Abgasschadstoffen in unschädliche Agenzien versehen sind.

Heizeinrichtungen für Kraftfahrzeuge, darunter insbesondere Stand- und Zusatzheizungen, sind in vielfältigen Formen bekannt, wie beispielsweise aus der EP-A-0 287 923 und der DE-A-37 16 187 hervorgeht. Derartige Heizeinrichtungen weisen generell Anordnungen zur Erzeugung von Wärme durch Verbrennung eines fluidischen Brennstoffes auf und sind darüber hinaus mit Wärmetauschern versehen, in denen die bei der Verbrennung erzeugte Wärme auf ein Wärmeträgerfluid wie Luft oder Wasser übertragen wird. In der EP-A-0 287 923 wird vorgeschlagen, die bei einer konventionellen Verbrennung entstandenen Abgase zwecks Reinigung vor der Abgabe ins Freie durch eine katalytisch aktive Matrix zu führen. In der DE-A-37 16 187 wird vorgeschlagen, den Brennstoff zumindest teilweise in einer katalytisch bewirkten, flammlosen Reaktion zu verbrennen; hierzu wird der Brennstoff einem Luftstrom zugemischt, und das Gemisch durch eine katalytisch aktive Matrix geleitet. Hinter der katalytisch aktiven Matrix befindet sich ein Wärmetauscher, in dem die bei der Verbrennung erzeugte wärme einem Wärmeträgerfluid übertragen wird, worauf der Gasstrom die Vorrichtung verläßt.

Die GB-A-2 074 889 betrifft die Bereitstellung eines heißen Gasstroms zur Wärmebehandlung von Lebensmitteln; der heiße Gasstrom wird gebildet, indem ein sauerstoffhaltiger, mit einem Brennstoff versetzter Gasstrom über einen Katalysator geleitet wird, wo Brennstoff und Sauerstoff exotherm miteinander reagieren. Zur Vorwärmung des sauerstoffhaltigen Gasstroms kann diesem an einer Abnahmestelle ein Bruchteil abgenommen, mit Brennstoff versetzt, über einen zweiten Katalysator zur Umsetzung des Brennstoffs geleitet und anschließend dem Gasstrom vor der Abnahmestelle wieder zugeführt werden. Auf diese Weise soll eine ansonsten notwendige permanent zu betreibende anderweitige, insbesondere elektrische Vorwärmung des Gasstroms entbehrlich werden. Generell erfolgt die hauptsächliche Aufheizung des Gasstroms bei einem einmaligen Durchgang durch den erstgenannten Katalysator; Rezirkulation des Gasstroms erfolgt allenfalls im Umfang eines Bruchteils, um den Gasstrom insgesamt vor dem eigentlichen Katalysator vorzuwärmen.

Die US-A-3,314,159 betrifft die Entsorgung von Lösungsmitteldämpfen aus einem der Austrocknung von Lacken dienenden Trockenofen. Es wird eine Einrichtung beschrieben, in der die Lösungsmitteldämpfe in einem sauerstoffhaltigen Gasstrom katalytisch verbrannt werden. Die Abgase der flammlosen Verbrennung werden als kohlendioxidreiche Gase zur Verdünnung und Vorwärmung der Lösungsmitteldämpfe herangezogen und dazu bruchteilsweise rezirkuliert. Der zur Verbrennung der Dämpfe notwendige Sauerstoff wird durch ständige Zufuhr von Frischluft bereitgestellt. Die Erzeugung von Wärme ist kein wesentlicher Zweck der Einrichtung gemäß der US-A-3,314,159, da diese Einrichtung als Hauptquelle für Wärme einen anderweitig beheizten Trockenofen enthält; die teilweise Rückführung der Abgase der katalytischen Verbrennung dient der Verdünnung der Lösungsmitteldämpfe. Ein wesentliches Merkmal der beschriebenen Einrichtung ist auch, daß sämtliche reagiblen Bestandteile der den Katalysator anströmenden Gase, insbesondere die Lösungsmitteldämpfe und der Sauerstoff, bei einem einmaligen Durchgang durch den Katalysator vollständig umgesetzt werden, damit sowohl die Kontamination der aus der Einrichtung ausgespeisten Abgase reduziert wird als auch das Gemisch aus Lösungsmitteldämpfen und Abgasen nicht zündfähig bleibt.

Die DE-A-38 35 939 betrifft die Beheizung eines Wabenkörpers zur Behandlung der Abgase in einem Kraftfahrzeug, wobei dieser mit einem heißen Gasstrom beaufschlagt wird. Die Erhitzung des Gasstroms erfolgt durch katalytische Verbrennung eines Brennstoffes, der diesem Gasstrom zugemischt wird, bevor dieser den Abgaskatalysator, bzw. ein weiteres katalytisch aktives Element, durchströmt. Auch kann der Gasstrom hinter dem Abgaskatalysator durch einen Wärmetauscher geführt werden, so daß die dem Gasstrom verbliebene Wärme einem weiteren Wärmeträger zur Beheizung des Kraftfahrzeug-Innenraums und/oder des Kraftfahrzeug-Kühlwassers übertragen werden kann.

Damit ein katalytisch aktives Element seine katalytische Wirkung entfalten kann, muß seine Temperatur eine gewisse Grenztemperatur, die sogenannte "Anspringtemperatur", überschreiten. Die üblicherweise als Katalysatoren verwendeten Edelmetalle wie Platin, Rhodium oder Palladium besitzen, wie auch bekannte katalytisch aktive Verbindungen, Anspringtemperaturen um 200 °C oder darüber. Entsprechend also ist es erforderlich, ein katalytisch aktives Element vorzuwärmen . Dies erfordert bei den vorgestellten Verbrennungsanlagen Vorheizeinrichtungen, die eine Erwärmung der katalytisch aktiven Elemente auf hinreichend hohe Temperaturen gestatten. Solche Vorheizeinrichtungen können z. B. elektrische Heizeinrichtungen beliebiger Art sein; entsprechende Vorschläge finden sich in der DE-A-22 51 631. In der DE-PS 5 63 757 wird darüber hinaus vorgeschlagen, einen metallischen Trägerkörper mit darauf aufgebrachtem katalytischem Material direkt elektrisch zu beheizen.

Im übrigen sind Trägerkörper in großer Zahl bekannt, die mit Beschichtungen aus katalytisch aktiven Materialien versehen und als katalytisch aktive Elemente hervorragend geeignet sind; siehe hierzu beispielsweise die Schriften EP-B-0 049 489, EP-B-0 121 174, EP-B-0 121 175, EP-A-0 245 737 und EP-A-0 245 738.

Sämtlichen Vorschlägen des Standes der Technik zur flammlosen Verbrennung eines Brennstoffes in einem katalytisch aktiven Element haftet ein substantieller Mangel an: Bei Erreichen des katalytisch aktiven Elementes hat der Gasstrom üblicherweise eine relativ geringe Temperatur, nämlich im wesentlichen die Temperatur der Umgebung der Vorrichtung, aus der er entnommen wurde. Mithin muß ein beachtlicher Teil der in dem katalytisch aktiven Element erzeugten Verbrennungswärme dazu aufgewendet werden, den kalten Gasstrom auf eine ausreichend hohe Temperatur aufzuwärmen, bevor überhaupt die Verbrennungsreaktion einsetzen kann. Dies aber bedeutet, daß die Reaktion in dem katalytisch aktiven Element instabil wird, sobald der Luftmassendurchsatz des Gasstroms eine gewisse Schwelle überschreitet. Insbesondere besteht die Gefahr, daß der Katalysator in seinem Anströmbereich, also in dem Bereich, der von dem Gasstrom zuerst berührt wird, so weit abgekühlt wird, daß die katalytische Reaktion zum Erliegen kommt. Es kann also eine gewisse "tote Zone" entstehen, die sich je nach Massendurchsatz und Temperatur des Gasstroms über das gesamte katalytisch aktive Element ausbreitet, so daß die Reaktion vollständig ausfällt. Zusammenfassend läßt sich sagen, daß bislang bekannte Methoden zur flammlosen Verbrennung eines Brennstoffes in einem Gasstrom nur in einem begrenzten, insbesondere nach oben stark eingeschränkten Leistungsbereich für die Erzeugung der Wärme geeignet sind.

Entsprechend liegt der Erfindung die Aufgabe zugrunde, die Erzeugung von Wärme durch flammlose Verbrennung eines Brennstoffes in einem Gasstrom so zu verbessern, daß die Verbrennungsreaktion stabil ist und einen für die praktische Anwendung ausreichend großen Regelbereich für die Wärmeleistung aufweist.

Diese Aufgabe löst erfindungsgemäß ein Verfahren zur Erzeugung von Wärme durch flammlose Verbrennung eines Brennstoffes in einem Gasstrom mit Sauerstoffgehalt, wobei
a) der Gasstrom durch mindestens eine Heizeinrichtung, entlang mindestens einer Zustelleinrichtung für den Brennstoff und entlang mindestens eines ersten katalytisch aktiven Elementes strömt;
b) der Gasstrom zu einem überwiegenden Teil in einer Schleife geführt wird und dabei durch eine erste Fördervorrichtung und entlang des ersten katalytisch aktiven Elementes strömt;
c) in die Schleife ein Gas mit Sauerstoffgehalt einspeisbar und aus der Schleife ein Teil des Gasstroms ausspeisbar ist;
d) der Brennstoff nur soweit dem Gasstrom zugemischt wird, daß das entstehende Brennstoff-Gas-Gemisch nicht selbst zündfähig ist.

Ein wesentliches Element der Erfindung ist die überwiegende Führung des Gasstroms in einer Schleife, die das katalytisch aktive Element und außerdem eine Fördervorrichtung zur Aufrechterhaltung des Gasstroms in der Schleife enthält. In der Schleife wird ein Teil des von dem katalytisch aktiven Element abströmenden Gasstroms wieder der Anströmseite des katalytisch aktiven Elementes zugeführt. Da die Temperatur des abströmenden Gasstroms durch die Verbrennung relativ hoch ist, ergibt sich durch den in der Schleife geführten Gasstromanteil eine Erhöhung der Temperatur des das katalytisch aktive Element anströmenden Gasstroms. Damit wird verhindert, daß der von dem Gasstrom angeströmte Bereich des katalytisch aktiven Elementes zu stark abkühlt, und die Entstehung toter Zonen wird ausgeschlossen. Darüber hinaus kann durch geeignete Wahl des rückgeführten Anteils eine im wesentlichen gleichmäßige Ausnutzung des katalytisch aktiven Elementes über seine gesamte Ausdehnung erreicht werden. Auch wird der Anteil der Verbrennungswärme, der zur Aufheizung des brennstoffhaltigen Gasstroms auf und über die Anspringtemperatur des Katalysators aufgewendet werden muß, stark verringert. Die Folge ist eine beträchtliche Vergrößerung des Regelbereiches für die erzeugte Wärmeleistung, ohne daß wesentliche Abstriche beim thermischen Wirkungsgrad in Kauf genommen werden müssen.

Gegenüber den Möglichkeiten aus dem Stand der Technik können gemäß der Erfindung erstmals die Betriebsbedingungen des Verfahrens ohne Berücksichtigung des Wärmetransports in dem katalytisch aktiven Element festgelegt werden. Der Massendurchsatz eines auf Umgebungstemperatur befindlichen Gasstroms, der das katalytisch aktive Element anströmt, muß unterhalb einer kritischen Größe bleiben, die sich aus der Größe des Wärmetransports zur Anströmseite des katalytisch aktiven Elementes bestimmt. Bei ausreichend hoher Vorwärmung des das katalytisch aktive Element anströmenden Gasstroms, wie es gemäß der Erfindung möglich ist, wird diese Grenze zu höheren Durchsätzen, unter Umständen bis hin zu Größen jenseits der praktischen Anwendbarkeit, verschoben. Damit wird eine Betriebsart möglich, bei der das Brennstoff-Sauerstoff-Verhältnis in dem Gasstrom unabhängig von der geforderten Wärmeleistung auf einem konstanten Wert gehalten und die Wärmeleistung lediglich über den Massendurchsatz des Gasstroms geregelt wird. Die Temperatur des Gasstroms beim Anströmen des katalytisch aktiven Elementes bleibt aufgrund der Rückführung durch die Schleife auf einem hinreichend hohen Wert, so daß die Verbrennungsreaktion vollkommen stabil gehalten werden kann.

Das erfindungsgemäße Verfahren zeichnet sich dadurch aus, daß der überwiegende Teil des Gasstroms, beispielsweise zu einem Anteil von etwa 70 % bis etwa 90 %, in der Schleife geführt wird. Es liegt damit im wesentlichen ein Gas-Kreisstrom vor, in den nach Bedarf Brennstoff und Luft (bzw. anderes sauerstoffhaltiges Gas) eingespeist werden können und aus dem nach Bedarf, z. B. zur Druckbegrenzung, Gas ausspeisbar ist. Damit sind die Vorteile der Wärmespeicherung in dem Gasstrom, insbesondere zur Aufrechterhaltung einer ausreichend hohen Betriebstemperatur des katalytisch aktiven Elementes, voll ausnutzbar; zur Vermeidung übermäßiger thermischer Belastungen kann durch Wärmeauskopplung in der Schleife die Temperatur des Gasstroms begrenzt, insbesondere auf einer Temperatur im Bereich der Anspringtemperatur des katalytisch aktiven Elementes, gehalten werden. Wenn die der Durchführung des Verfahrens dienende Anlage ihre Betriebstemperatur erreicht hat, ist die Wärmeerzeugung zur Aufrechterhaltung dieser Betriebstemperatur nur insoweit erforderlich, als die Abfuhr von Wärme ausgeglichen werden muß.

Eine besonders vorteilhafte Eigenschaft der Erfindung ist auch, daß die Zustellung von Brennstoff in den Gasstrom jederzeit so gering gehalten wird, daß das entstehende Brennstoff-Gas-Gemisch nicht selbstzündfähig, insbesondere nicht explosiv ist. Wie bereits ausgeführt, kann die Temperatur des Gasstroms beim Anströmen des katalytisch aktiven Elementes durch die Rückführung in der Schleife weitgehend unabhängig von seiner Strömungsgeschwindigkeit, und damit dem Massendurchsatz, ausreichend hoch gehalten werden. Entsprechend kann der Massendurchsatz des Gasstroms im wesentlichen frei der Menge des zugestellten Brennstoffs, die die thermische Leistung bestimmt, angepaßt werden; insbesondere kann das Mischungsverhältnis von Brennstoff und Sauerstoff in dem Gasstrom konstant, vorzugsweise konstant mager, gehalten werden. Ein praktisch vollkommen sicherer Betrieb ist somit möglich.

Die Ingangsetzung des erfindungsgemäßen Verfahrens erfolgt günstigerweise derart, daß vor dem Einsetzen der katalytischen Reaktion der in der Schleife geführte Gasstrom von einer Heizeinrichtung, die vorzugsweise elektrisch betrieben wird, solange aufgewärmt wird, bis seine Temperatur die Anspringtemperatur des katalytisch aktiven Elementes erreicht, bzw. bis das katalytisch aktive Element ausreichend aufgeheizt ist. Weitere Maßnahmen zur Einleitung der Verbrennung, wie z. B. besondere Zündbrenner oder elektrische Zündkerzen, sind nicht erforderlich.

Bei der Ingangsetzung des Verfahrens kann vorteilhafterweise die Einspeisung sauerstoffhaltigen Gases in den zirkulierenden Gasstrom unterbleiben, nachdem ein Gasstrom mit hinreichendem Sauerstoffgehalt aufgebaut ist. Auch ist vor dem Einsetzen der Verbrennung keine dauernde Zugabe von Brennstoff erforderlich; es ist vollkommen ausreichend, den Gasstrom einmal mit einer geringen Menge Brennstoff zu versetzen, da es bei der katalytischen Verbrennung nicht auf ein spezielles Mischungsverhältnis von Brennstoff und Sauerstoff ankommt. Der mit Brennstoff versetzte, sauerstoffhaltige Gasstrom wird lediglich solange von der Heizeinrichtung aufgewärmt, bis das katalytisch aktive Element durch Wärmeübertragung und/oder direkte Vorheizung eine Temperatur erreicht hat, bei der der Katalysator aktiviert wird. Das Ingangsetzen des erfindungsgemäßen Verfahrens ist mithin in jeder Phase vollkommen sicher, da hohe Konzentrationen von Brennstoff, mit der damit verbundenen Gefahr von Fehlzündungen, vermieden werden.

Die Einspeisung von frischem, sauerstoffhaltigem Gas in die Schleife wird günstigerweise derart begrenzt, daß die Temperatur des Gasstroms beim Erreichen des katalytisch aktiven Elementes dessen Anspringtemperatur nicht unterschreitet. Diese Möglichkeit steht dem erfindungsgemäßen Verfahren immer offen; ihre Vorteile ergeben sich naturgemäß in erster Linie dann, wenn das Verfahren mit einem stets mageren Brennstoff-Luft-Gemisch durchgeführt wird.

Die Ausspeisung von Gas aus dem in der Schleife geführten Gasstrom wird unbeschadet weiterer Ausgestaltungen des Verfahrens vorteilhafterweise derart gesteuert, daß nur dann eine Ausspeisung erfolgt, wenn der Gasdruck in der Schleife einen gewissen Grenzwert überschreitet. Durch eine Verbrennung bei hohem Sauerstoffüberschuß ist eine mehrfache Rezirkulation des Gasstroms möglich, ohne daß die guten Eigenschaften des Verfahrens, darunter die ausgeprägte Schadstoffarmut der flammlosen Verbrennung, verlorengehen. Lediglich ist mit der Erwärmung des Gasstroms eine Erhöhung des Innendrucks verbunden, der durch Ausspeisung von Gas begegnet werden muß. Die Ausspeisung kann dabei mittels geeigneter Ventile, insbesondere mittels selbsttätiger Überdruck-Sicherheitsventile, erfolgen; unter Umständen kann die Druckregelung auch durch reine strömungstechnische Maßnahmen, beispielsweise durch die Ausgestaltung des der Ausspeisung dienenden Gasauslasses als Stichleitung mit ausreichend geringem hydraulischem Querschnitt, erfolgen.

Ein besonderes Anwendungsgebiet des erfindungsgemäßen Verfahrens ist die Erzeugung von Wärmeenergie für Heizzwecke; insbesondere bezieht sich die Erfindung auf portable und mobile Heizanlagen, wie Heizgebläse für Lagerhallen oder dergleichen, und Heizeinrichtungen für Kraftfahrzeuge. Entsprechend wird ein Verfahren nach der Erfindung für die Erzeugung von Wärmeenergie mit einer maximalen thermischen Leistung von etwa 10 Kilowatt, insbesondere bis zu etwa 7 Kilowatt, vorzugsweise im Bereich von 4 Kilowatt, ausgelegt.

Vorteilhafte Anwendungen findet das Verfahren nach der Erfindung in erster Linie zur Einbringung der in dem Gasstrom erzeugten Wärme in eine von diesem umströmbare und/oder durchströmbare Komponente, namentlich einen oder mehrere Wärmetauscher und/oder einen oder mehrere Abgaskatalysatoren.

Gegenstand der Erfindung ist auch eine Vorrichtung zur Erzeugung von Wärme durch flammlose Verbrennung eines Brennstoffes in einem Gasstrom mit Sauerstoffgehalt, enthaltend ein Gasführungssystem zur Führung eines Gasstroms, mit mindestens einer Schleife, einer ersten Zustelleinrichtung zur Zustellung des Brennstoffes, einem Gaseinlaß und einem Gasauslaß, einer ersten Fördereinrichtung zur Aufrechterhaltung des Gasstroms in der Schleife, einer Heizeinrichtung und einem ersten katalytisch aktiven Element, wobei
ein Großteil des Gasstroms in der Schleife einen Gas-Kreisstrom bildet, aus dem nach Bedarf Gas ein- und ausspeisbar ist, und wobei eine von dem Gasstrom umströmbare und/oder durchströmbare Komponente zur Wärmeaufnahme in der Schleife angeordnet ist.

Eine Vorrichtung mit diesen Merkmalen ist für den Einsatz als portables ocer mobiles Heizsystem, beispielsweise als Stand-oder Zusatzheizanlage für ein Kraftfahrzeug oder als portable Heizanlage zur Beheizung großer Hallen hervorragend geeignet. Es ist auch möglich, aufgrund der vermöge der flammlosen Verbrennung relativ niedrigen Betriebstemperaturen preiswerte Werkstoffe zum Aufbau zu verwenden, ohne daß Einbußen im Hinblick auf Lebensdauer und Belastbarkeit in Kauf genommen werden müssen.

Die Anordnung der Zustelleinrichtung für den Brennstoff ist relativ unkritisch; sie kann im Gaseinlaß angeordnet werden, so daß eine Brennstoffzustellung in den Gasstrom nur zusammen mit einer gewissen Menge von Frischgas möglich ist. Damit wird immerhin vermieden, daß in dem in der Schleife geführten Gasstrom Sauerstoffmangel auftritt, der konsequenterweise bei der Verbrennung zur Produktion von Schadstoffen, wie z. B. Kohlenmonoxid, führen müßte. Es kann aber auch sinnvoll sein, die Zustelleinrichtung so anzuordnen, daß Brennstoff direkt in die Schleife injiziert wird. Derart kann jedenfalls der Gasstrom zumindest eine Zeit lang ohne Einspeisung von Frischgas in der Schleife geführt werden, was insbesondere bei geringen Wärmeleistungen im Hinblick auf die vermeidung von wärmeleckagen sehr interessant ist. Selbstverständlich ist es dann erforderlich, durch geeignete Überwachungsmaßnahmen das Auftreten von Sauerstoffmangel zu vermeiden.

Die Komponente, in die die Verbrennungswärme einzubringen ist, ist erfindungsgemäß ein Bestandteil der Schleife; sie kann vorteilhafterweise in das bereits erwähnte System zur Regelung der Temperaturen in dem Gasstrom einbezogen werden. Die Komponente entzieht dem Gasstrom auf jeden Fall Wärme; sie kann so bemessen werden, daß die Temperatur des Gasstroms, wenn er die Komponente durchströmt hat, auf einem Temperaturniveau im Bereich der Anspringtemperatur des katalytisch aktiven Elementes liegt; das erfindungsgemäße Verfahren mit praktisch vollständiger Rückführung des Gasstroms in der Schleife, mit allen sich daraus ergebenden Vorteilen, kann derart realisiert werden. Im übrigen ist es sehr wohl denkbar und auch vorteilhaft, sowohl eine Komponente in der Schleife als auch eine Komponente in dem Gasauslaß anzuordnen; bei gewissen Anwendungen kann dies zusätzliche Vorteile nach sich ziehen.

Eine Weiterbildung der erfindungsgemäßen Vorrichtung, die zu anderen Weiterbildungen hinzutreten kann, zeichnet sich dadurch aus, daß das die flammlose Verbrennung bewirkende erste katalytisch aktive Element Bestandteil der Heizeinrichtung ist. Die Vorrichtung weist also ein im wesentlichen direkt und unmittelbar beheizbares erstes katalytisch aktives Element auf. Bei der Inbetriebsetzung dieser Vorrichtung, durchzuführen in beschriebener Weise durch Vorheizen des Gasstroms mittels der Heizeinrichtung, wird das erste katalytisch aktive Element direkt aufgewärmt und kann daher seine Anspringtemperatur besonders schnell erreichen. Ist dies der Fall, so setzt die flammlose Verbrennung ein und liefert zusätzliche Energie zur Aufheizung des Gasstroms und der weiteren Bestandteile der Vorrichtung. Der für die Ingangsetzung des Verfahrens erforderliche Bedarf an außerhalb der Vorrichtung aufzubringender Heizenergie kann auf diese Weise beträchtlich reduziert werden, was insbesondere im Hinblick auf mögliche Anwendungen in Kraftfahrzeugen interessant ist.

Die Heizeinrichtung selbst wird günstigerweise mit einer Heizleiteranordnung gebildet, die mit einem elektrischen Strom beaufschlagbar ist. Die Elektroheizung ist eine einfache und saubere Möglichkeit und damit ausgezeichnet vor anderen Heizeinrichtungen, wie z. B. konventionellen Brennern.

Das Einspeisen von Gas in die Vorrichtung erfolgt in der Regel nicht selbsttätig; es ist eine Fördermöglichkeit für frisches Gas vorzusehen. Diese Fördermöglichkeit kann gegeben sein durch eine geeignet gestaltete erste Fördervorrichtung in der Schleife; andernfalls kann eine zweite Fördervorrichtung zur Zustellung von Frischgas in die Schleife in dem Gaseinlaß angeordnet werden.

Vorteilhaft ist es weiterhin, in der Vorrichtung nach der Erfindung Sensoren zur Betriebsüberwachung vorzusehen. Hierzu sind besonders Lambda-Sonden zur Bestimmung der Zusammensetzung des zirkulierenden Gasstroms und auch Thermoelemente zur Überwachung der Betriebstemperaturen günstig und sinnvoll.

Ein wesentliches Anwendungsgebiet der Erfindung ist die Beheizung katalytisch aktiver Elemente, insbesondere die Beheizung der Abgaskatalysatoren in Abgassystemen von Kraftfahrzeugen vor der Inbetriebnahme des Verbrennungsmotors. Bekannt ist die elektrische Beheizung von Abgaskatalysatoren mit metallischen Trägerkörpern, die jedoch nur für spezielle, hinsichtlich ihres elektrischen Widerstandes optimierte Trägerkörper sinnvoll anwendbar ist. Um eine sinnvolle Vorheizung zu erzielen, muß der Trägerkörper mit Leistungen von 1 kW und darüber beaufschlagt werden; die Bereitstellung solcher Leistungen ist jedoch mit der elektrischen Anlage eines Kraftfahrzeuges nur in stark eingeschränktem Umfang möglich. Außerdem beträgt der elektrische Widerstand eines metallischen Trägerkörpers üblicher Bauart je nach Größe nur wenige hundertstel Ohm, was für eine elektrische Beheizung in Anbetracht der Verlustwiderstände in den Zuführungsleitungen nicht günstig ist. Die Erfindung erlaubt nunmehr die Beheizung eines Abgaskatalysators mit der Wärme aus einer sauberen und sicheren Verbrennungsreaktion, wobei ohne weiteres Heizleistungen bis zu mehreren Kilowatt möglich sind. Eine eventuelle elektrische Beheizung betrifft nur noch das erste katalytische Element, das die wärmeproduzierende Verbrennungsreaktion auslöst. Dieses erste katalytische Element ist aber in aller Regel kleiner als der Abgaskatalysator, so daß sich das Problem des geringen elektrischen Widerstandes in weit geringem Umfang, wenn überhaupt, stellt. Darüber hinaus ist das erste katalytische Element nicht den thermischen und mechanischen Belastungen des Abgaskatalysators, der mit einem pulsierenden Abgasstrom beaufschlagt wird, unterworfen; es braucht dementsprechend nicht auf höchste Belastbarkeit getrimmt zu werden und bietet somit eine Fülle konstruktiver Möglichkeiten zur Erhöhung des elektrischen Widerstandes.

Ein weiteres Anwendungsgebiet der Erfindung ist die Bereitstellung von Wärme zu Heizzwecken, insbesondere zur Beheizung von Kraftfahrzeugen, wobei in der erfindungsgemäßen Vorrichtung mindestens eine der Wärmeaufnahme dienende Komponente ein Wärmetauscher ist. Der Wärmetauscher weise dabei sowohl ein Kanalsystem für die Führung des Gasstroms als auch ein Kanalsystem für die Führung eines Wärmeträgerfluides, insbesondere Luft oder Wasser, auf. Beim Betrieb der Vorrichtung wird das Wärmeträgerfluid von einer externen oder internen Fördervorrichtung durch den Wärmetauscher transportiert, wobei es sich erwärmt und anschließend dem gewünschten Heizzweck dient.

Als Wärmeträgerfluid kommen sowohl Luft als auch Wasser in Frage. Speziell im Fall der Kraftfahrzeugheizung kann die Kühlflüssigkeitssystem integriert werden, wobei im letzteren Fall gleichzeitig mit der Beheizung des Innenraums eine Vorwärmung des Verbrennungsmotors vor Inbetriebnahme möglich ist.

Unbeschadet weiterer Ausgestaltungen ist eine besonders vorteilhafte Weiterbildung der erfindungsgemäßen Vorrichtung mit Wärmetauscher dadurch gekennzeichnet, daß der Wärmetauscher das die Verbrennungsreaktion auslösende erste katalytisch aktive Element trägt, beispielsweise derart, daß das den Gasstrom führende Leitungssystem des Wärmetauschers Wandungen aufweist, die katalytisch wirksame Schichten tragen, an denen der Gasstrom vorbeistreicht (die Möglichkeit des Vorhandenseins eines weiteren ersten katalytisch aktiven Elementes soll dabei nicht ausgeschlossen sein). Eine entsprechend ertüchtigte Vorrichtung weist einen sehr kurzen Übertragungsweg für die Verbrennungswärme auf; der Wärmeübergang erfolgt derart mit hohem Wirkungsgrad sowie bei besonders geringen Verlusten, und eine besonders kompakte Bauform für die Vorrichtung ist erzielbar.

Wie bereits erwähnt, können in der Vorrichtung gemäß der Erfindung wärmeaufnehmende Komponenten sowohl in dem die Schleife bildenden Gasführungssystem als auch im Gasauslaß angeordnet werden. Eine dementsprechende, besonders interessante Weiterbildung ergibt sich durch Anordnung je eines Wärmetauschers in der Schleife und in dem Gasauslaß, wobei vorzugsweise die das Wärmeträgerfluid führenden Kanalsysteme der Wärmetauscher miteinander kommunizieren, insbesondere in Reihe geschaltet sind. Eine derartige Vorrichtung liefert aus dem Gasauslaß ein relativ stark abgekühltes Abgas und ist daher besonders günstig zur Verwendung in wärmeempfindlichen oder gegen übermäßige Hitze zu schützenden Umgebungen, beispielsweise Kraftfahrzeug-Innenräumen.

Die Erfindung wird anhand der in der Zeichnung schematisch dargestellten Ausführungsbeispiele weiter erläutert, wobei die Figuren der Zeichnung Vorrichtungen zur Erzeugung von Wärme durch flammlose Verbrennung eines Brennstoffes in einem in einer Schleife geführten Gasstrom und Einbringung dieser Wärme in eine Komponente darstellen. Im einzelnen zeigen:
Figur 1 eine Vorrichtung zur Aufheizung eines Abgaskatalysators in einem Kraftfahrzeug;
Figur 2 eine Vorrichtung zur Abführung der bei der Verbrennung erzeugten Wärme mittels eines Wärmetauschers;
Figur 3 eine Vorrichtung nach Art der in Figur 2 dargestellten Vorrichtung, die beispielsweise als Stand- oder Zusatzheizung in einem Kraftfahrzeug besonders geeignet ist.

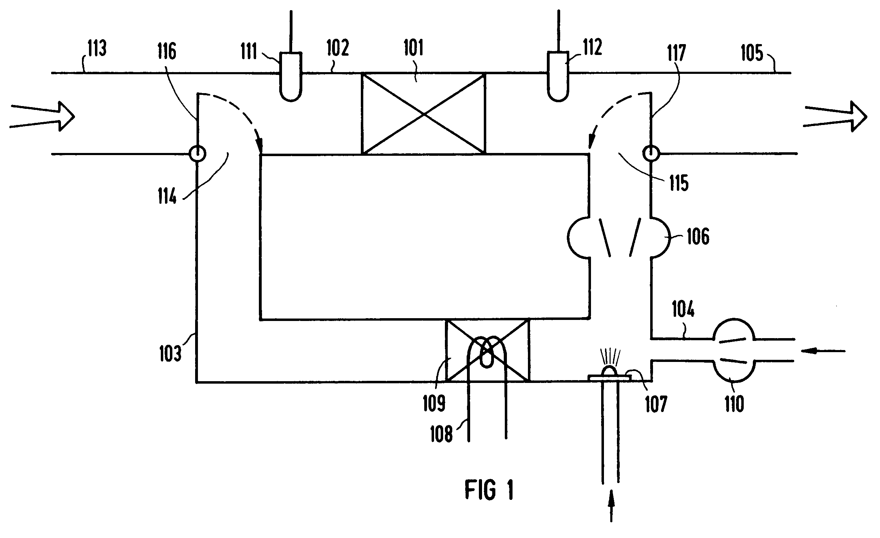

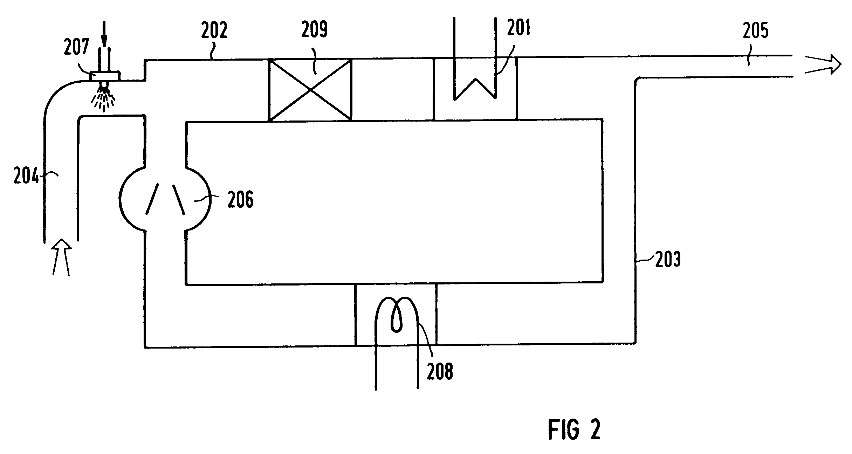

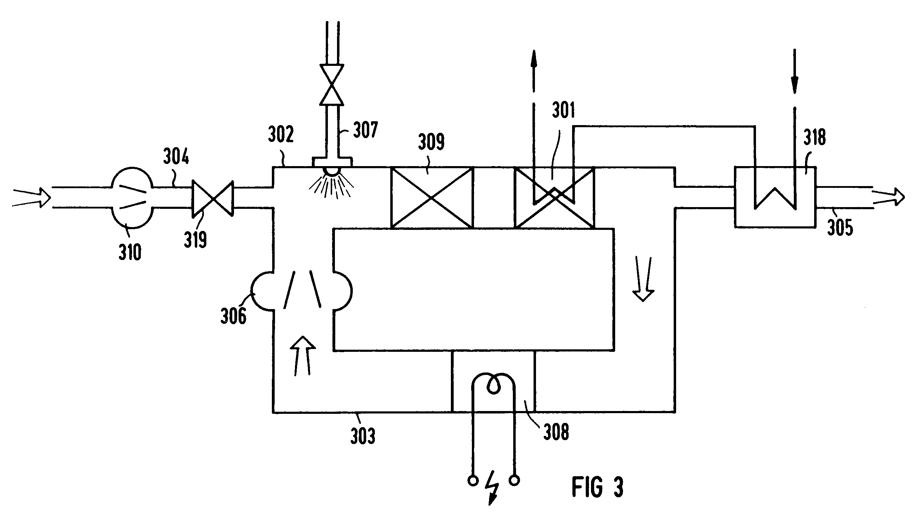

Zur Erläuterung der für die Erfindung wesentlichen Einzelheiten wird zunächst auf alle drei Figuren der Zeichnung zugleich Bezug genommen; dazu wird angemerkt, daß die Bezugszeichen 101 bis 117 die Figur 1, die Bezugszeichen 201 bis 209 die Figur 2 und die Bezugszeichen 301 bis 319 die Figur 3 betreffen. In jedem Fall weist die Vorrichtung nach der Erfindung ein Gasführungssystem 102, 202, 302 auf, das aus Rohrleitungen oder dergleichen besteht und zur Führung des Gasstroms dient, wobei das Gasführungssystem 102, 202, 302 mindestens eine Schleife 103, 203, 303, aufweist, in der der Gasstrom im Kreis führbar ist. Dem in der Schleife 103, 203, 303 zirkulierenden Gasstrom ist durch einen Gaseinlaß 104, 204, 304 Frischgas mit Sauerstoffgehalt, insbesondere Luft, zuführbar; durch einen Gasauslaß 105, 205, 305 kann aus dem zirkulierenden Gasstrom ein gewisser Anteil ausgespeist werden. Während das Ausspeisen von Gas im wesentlichen passiv erfolgen kann, beispielsweise dadurch, daß der Gasauslaß 105, 205, 305 als langgestrecktes Rohr mit einem hydraulischen Querschnitt ausgeführt wird, der wesentlich geringer ist als der mittlere hydraulische Querschnitt des die Schleife 103, 203, 303 bildenden Rohrsystems, hat die Einspeisung von Gas aktiv, über geeignete Fördermittel, zu erfolgen. Die Zirkulation des Gasstroms in der Schleife 103, 203, 303 wird bewirkt durch eine erste Fördervorrichtung 106, 206, 306, insbesondere ein Gebläse, das in dem die Schleife 103, 203, 303 bildenden Teil des Gasführungssystems 102, 202, 302 angeordnet ist. Zur Zustellung von Brennstoff in den Gasstrom ist in der Schleife 103, 203, 303 eine entsprechende Zustelleinrichtung 107, 207, 307, namentlich eine Düse oder Düsenanordnung mit einem geeigneten Brennstoffzuführungssystem, enthalten. Erfindungsgemäß erfolgt die Verbrennung des Brennstoffes in flammloser, katalytisch bewirkter Weise. Dazu weist die Schleife 103, 203, 303 ein katalytisch aktives Element 109, 209, 309 auf, insbesondere einen von dem Gasstrom durchströmbaren Wabenkörper mit einer Vielzahl von Kanälen, die auf ihren dem Gasstrom zugewandten Wandungen eine Beschichtung aus einem katalytischen Material (Platin, Rhodium oder dergleichen) aufweisen. Die Verbrennung in dem katalytisch aktiven Element 109, 209, 309 setzt bekanntermaßen erst dann ein, wenn die Temperatur des an dem katalytischen Material vorbeistreichenden Gasstroms die Anspringtemperatur des Katalysators überschreitet. Entsprechend ist in der Schleife 103, 203, 303 eine Heizeinrichtung 108, 208, 308 vorgesehen. Diese Heizeinrichtung 108, 208, 308 kann eine mit einem elektrischen Strom beaufschlagbare Heizleiteranordnung sein, sie kann aber auch je nach Anwendung als normaler Brenner oder als Wärmetauscher ausgeführt werden. Schließlich weist jede dargestellte Vorrichtung mindestens eine Komponente 101, 201, 301, 318 auf, in die die bei der flammlosen Verbrennung in dem zirkulierenden Gasstrom entstandene Wärme einzubringen ist. Anwendungsbeispiele werden im folgenden im Rahmen der Einzelbeschreibungen der Figuren der Zeichnung weiter erläutert.

Figur 1 zeigt in schematischer Darstellung die Anwendung der Erfindung im Rahmen einer Vorrichtung zur Aufheizung eines Abgaskatalysators im Abgassystem eines Kraftfahrzeuges; der Abgaskatalysator stellt dabei die Komponente 101 dar, die mit der durch flammlose Verbrennung des Brennstoffes in dem zirkulierenden Gasstrom entstandenen Wärme zu beaufschlagen und von dieser Wärme aufzuheizen ist. Das Gasführungssystem 102 wird gebildet aus einem Abgasrohrstück 113, in dem der Abgaskatalysator 101 angeordnet ist, wobei, in Richtung des Abgasstroms gesehen, das Abgasrohrstück 113 vor und hinter dem Abgaskatalysator 101 jeweils eine Einmündung 114, 115 aufweist. Die Einmündungen 114, 115 sind über eine Umwegleitung miteinander verbunden, so daß die Schleife 102 gebildet wird aus dem zwischen den Einmündungen 114, 115 gelegenen Abgasrohrstück 113 und der Umwegleitung. Diese ist an beiden Einmündungen 114, 115 mittels Klappen 116, 117 verschließbar, was im Hinblick auf die Belastung der Vorrichtung bei der Beaufschlagung mit Abgas zum Schutz der in der Umwegleitung befindlichen Einrichtungen sinnvoll sein kann. Prinzipiell erforderlich sind die Klappen 116, 117 nicht; sie dienen weniger zur Sicherstellung der einwandfreien Funktion der erfindungsgemäßen Vorrichtung, sondern mehr dem Schutz der in der Umwegleitung befindlichen Einrichtungen. In das Gasführungssystem 102 integriert sind eine Lambda-Sonde 111 und ein Thermoelement 112; im Regelfall ist dem Abgaskatalysator 101 ohnehin eine Lambda-Sonde 111 zugeordnet, und es empfiehlt sich, diese auch beim Betrieb der erfindungsgemäßen Vorrichtung zur Regelung der flammlosen Verbrennung einzusetzen. Auch das Thermoelement 112 kann bei der Beaufschlagung des Abgaskatalysators 101 mit Abgas als Funktionskontrolle für den Abgaskatalysator 101 dienen; im Rahmen der Erfindung ist es zur Bestimmung der Temperatur des aufzuheizenden Abgaskatalysators 101 hilfreich. In der die Einmündungen 114, 115 miteinander verbindenden Umwegleitung sind, wie bereits erwähnt, die erste Fördervorrichtung 106, die Zustelleinrichtung 107, die Heizeinrichtung 108 und das erste katalytisch aktive Element 109 untergebracht; darüber hinaus mündet der Gaseinlaß 104 in die Umwegleitung. Der Gasauslaß 105 ist im dargestellten Beispiel unmittelbar die ins Freie mündende Abgasleitung. Im Gaseinlaß 104 vorgesehen ist darüber hinaus eine zweite Fördervorrichtung 110 zur Zustellung von Frischluft. Außerdem ist im Rahmen einer günstigen Ausgestaltung der Erfindung die Heizeinrichtung 108 mit dem ersten katalytisch aktiven Element 109 vereinigt; dies kann konkret beispielsweise dadurch bewerkstelligt werden, daß ein metallischer Wabenkörper als Träger der katalytisch aktiven Schicht eingesetzt wird, der von einem elektrischen Strom durchströmbar und somit aufheizbar ist. Dies ist eine besonders gute Wahl, da damit bereits nach kurzer Anlaufzeit der erfindungsgemäßen Vorrichtung das Einsetzen der katalytischen Reaktion gewährleistet ist; die Beheizung des ersten katalytisch aktiven Elementes 109 hat darüber hinaus den Vorteil, daß die katalytische Reaktion stabilisiert werden kann, solange die Temperatur des zirkulierenden Gasstroms noch unterhalb der erforderlichen Anspringtemperatur liegt. Die Zustelleinrichtung 107 für den Brennstoff befindet sich im dargestellten Beispiel in der Umwegleitung zwischen dem Gaseinlaß 104 und der Heizeinrichtung 108. Die Positionierung der Zustelleinrichtung 107 in der Schleife 103 ist relativ unkritisch; im vorliegenden Beispiel sollte natürlich vermieden werden, die Zustelleinrichtung 107 unmittelbar in dem Abgasrohrstück 113 vorzusehen. Mittel zur Förderung des Brennstoffes sind, da ihre Anwendung dem Fachmann geläufig ist, in der Figur 1 nicht dargestellt.

Figur 2 zeigt eine Vorrichtung, bei der die mit der bei der Verbrennung entstandenen Wärme zu beaufschlagende Komponente 201 ein Wärmetauscher zur Aufheizung eines Wärmeträgerfluides wie Luft oder Wasser ist, beispielsweise zur Anwendung im Rahmen einer Heizanlage, insbesondere einer portablen oder mobilen Heizanlage in Form einer Stand- oder Zusatzheizung für ein Kraftfahrzeug. Als Besonderheit ist in Figur 2 die Zustelleinrichtung 207 für den Brennstoff nicht direkt in der Schleife 203, sondern im Gaseinlaß 204 enthalten. In diesem Falle kann Brennstoff dem in der Schleife 203 zirkulierenden Gasstrom nur zusammen mit Frischluft zugeführt werden (wozu eine nicht dargestellte Fördervorrichtung erforderlich ist); dies hat den Vorteil, daß das Auftreten eines Sauerstoffunterschusses in dem zirkulierenden Gasstrom ausgeschlossen ist, was ansonsten nur mittels einer sorgfältigen Überwachung des Verbrennungsprozesses möglich wäre. Der Gasauslaß 205 ist dargestellt als relativ lange Leitung mit kleinem hydraulischen Querschnitt. Durch die Länge der Leitung wird verhindert, daß Gas aus dem Gasstrom unkontrolliert durch den Gasauslaß ins Freie gewirbelt wird; ein Druckanstieg in der Schleife 203 wird jedoch, da es keinerlei Schließvorrichtungen in dem Gasauslaß 205 gibt, zuverlässig ausgeschlossen. Es versteht sich, daß im Rahmen entsprechender Anforderungen das Vorsehen von Schließvorrichtungen wie Ventilen oder dergleichen im Gasauslaß 205 möglich ist.

Figur 3 zeigt eine weitere Ausgestaltung der Vorrichtung nach der Erfindung zur Übertragung der bei dem Verbrennungsprozeß erzeugten Wärme auf ein Wärmeträgerfluid, wobei die Übertragung im vorliegenden Fall in zwei hintereinandergeschalteten Wärmeaustauschern 301, 318 erfolgt. Dabei ist ein erster Wärmetauscher 301 direkt in der Schleife 303 angeordnet, und ein zweiter Wärmetauscher 318 befindet sich im Gasauslaß 305. Die wesentlichste Funktion des zweiten Wärmetauschers 318 ist dabei die Kühlung des durch den Gasauslaß 305 ausgespeisten Abgases, was z. B. im Rahmen einer Kraftfahrzeug-Standheizung, die im Innenraum eines Kraftfahrzeuges anzuordnen sein soll, sinnvoll sein kann. Als Besonderheit entfaltet der erste Wärmetauscher 301 eine gewisse katalytische Wirkung, indem z.B. die von dem Gasstrom durchströmbaren Kanäle des Wärmetauschers 301 auf ihren Wänden eine katalytisch wirksame Beschichtung aufweisen. Unter Umständen kann der erste Wärmetauscher 301 die Funktion des ersten katalytisch aktiven Elementes 309 vollständig übernehmen, was im Hinblick auf eine möglichst kompakte Ausführung der Vorrichtung vorteilhaft ist. Die Heizeinrichtung 308 wird günstigerweise mit einem elektrischen Strom betrieben. Der Gaseinlaß 304 weist neben einer zur Förderung von Frischgas erforderlichen zweiten Fördervorrichtung 310 ein Einlaßventil 319 auf, das zur feinen Regelung der in die Schleife 303 zugestellten Frischgasmenge dient.

## Patentansprüche

1. Verfahren zur Erzeugung von Wärme durch flammlose Verbrennung eines Brennstoffes in einem Gasstrom mit Sauerstoffgehalt, wobei
a) der Gasstrom durch mindestens eine Heizeinrichtung (108; 208; 308), entlang mindestens einer Zustelleinrichtung (107; 207; 307) für den Brennstoff und entlang mindestens eines ersten katalytisch aktiven Elementes (109; 209; 309) strömt;
b) der Gasstrom zu einem überwiegenden Teil in einer Schleife (103; 203; 303) geführt wird und dabei durch eine erste Fördervorrichtung (106; 206; 306) und entlang des ersten katalytisch aktiven Elementes (109; 209; 309) strömt;
c) in die Schleife (103; 203; 303) ein Gas mit Sauerstoffgehalt einspeisbar und aus der Schleife (103; 203; 303) ein Teil des Gasstroms ausspeisbar ist;
d) der Brennstoff nur so weit dem Gasstrom zugemischt wird, daß das entstehende Brennstoff-Gas-Gemisch nicht selbst zündfähig ist.

2. Verfahren nach Anspruch 1, wobei der Gasstrom zu etwa 70 % bis etwa 90 % in der Schleife (103; 203; 303) geführt wird.

3. Verfahren nach Anspruch 1 oder 2, wobei bei der Ingangsetzung des Verfahrens der Gasstrom von der Heizeinrichtung (108; 208; 308) zumindest solange aufgeheizt wird, wie die Temperatur des Gasstroms unterhalb der Anspringtemperatur des ersten katalytisch aktiven Elementes (109; 209; 309) liegt.

4. Verfahren nach Anspruch 3, wobei kein Gas in die Schleife (103; 203; 303) eingespeist wird, solange der Gasstrom aufgeheizt wird.

5. Verfahren nach einem der vorhergehenden Ansprüche, wobei in die Schleife (103; 203; 303) Gas nur derart eingespeist wird, daß die Temperatur des Gasstroms beim Erreichen des ersten katalytisch aktiven Elementes (109; 209; 309) nicht unterhalb dessen Anspringtemperatur liegt.

6. Verfahren nach einem der vorhergehenden Ansprüche, wobei ein Teil des Gasstroms aus der Schleife (103; 203; 303) ausgespeist wird, wenn der Gasdruck in der Schleife (103; 203; 303) einen Grenzwert überschreitet.

7. Verfahren nach einem der vorhergehenden Ansprüche, wobei die Erzeugung der Wärme mit einer maximalen thermischen Leistung von etwa 10 Kilowatt, insbesondere etwa 7 Kilowatt, vorzugsweise etwa 4 Kilowatt, erfolgt.

8. Verfahren nach einem der vorhergehenden Ansprüche, wobei die Wärme in mindestens eine von dem Gasstrom umströmbare und/oder durchströmbare Komponente (101; 201; 301; 318) eingebracht wird.

9. Vorrichtung zur Erzeugung von Wärme durch flammlose Verbrennung eines Brennstoffes in einem Gasstrom mit Sauerstoffgehalt, enthaltend ein Gasführungssystem (102; 202; 302) zur Führung eines Gasstroms, mit mindestens einer Schleife (103; 203; 303), einer ersten Zustelleinrichtung (107; 207; 307) zur Zustellung des Brennstoffes, einem Gaseinlaß (104; 204; 304) und einem Gasauslaß (105; 205; 305), einer ersten Fördereinrichtung (106; 206; 306) zur Aufrechterhaltung des Gasstroms in der Schleife (103; 203; 303), einer Heizeinrichtung (108; 208; 308) und einem ersten katalytisch aktiven Element (109; 209; 309),
dadurch gekennzeichnet, daß
ein Großteil des Gasstroms in der Schleife (103; 203; 303) einen Gas-Kreisstrom bildet, aus dem nach Bedarf Gas ein- und ausspeisbar ist, und wobei eine von dem Gasstrom umströmbare und/oder durchströmbare Komponente (101; 201; 301) zur Wärmeaufnahme in der Schleife (103; 203; 303) angeordnet ist.

10. Vorrichtung nach Anspruch 9, wobei eine weitere zur Wärmeaufnahme bestimmte Komponente (318) in dem Gasauslaß (105; 205; 305) angeordnet ist.

11. Vorrichtung nach Anspruch 9 oder 10, wobei das erste katalytisch aktive Element (109; 209; 309) Bestandteil der Heizeinrichtung (108; 208; 308) ist.

12. Vorrichtung nach einem der Ansprüche 9 bis 11, wobei die Heizeinrichtung (108; 208; 308) eine Heizleiteranordnung umfaßt, die mit einem elektrischen Strom beaufschlagbar ist.

13. Vorrichtung nach einem der Ansprüche 9 bis 12, wobei der Gaseinlaß (104; 204; 304) eine zweite Fördervorrichtung (110) zur Zustellung von Gas in den Gasstrom enthält.

14. Vorrichtung nach einem der Ansprüche 9 bis 13, wobei in der Schleife (103; 203; 303) mindestens eine Lambda-Sonde (111) angeordnet ist.

15. Vorrichtung nach einem der Ansprüche 9 bis 14, wobei in der Schleife (103; 203; 303) mindestens ein Thermoelement (112) angeordnet ist.

16. Vorrichtung nach einem der Ansprüche 9 bis 15, wobei die Komponente (101; 201; 301; 318) ein zweites katalytisch aktives Element (101) ist.

17. Vorrichtung nach Anspruch 16, wobei das Gasführungssystem (102; 202; 302) teilweise Bestandteil eines Abgassystems für ein Kraftfahrzeug und das zweite katalytisch aktive Element (101) ein Abgaskatalysator in dem Abgassystem ist.

18. Vorrichtung nach Anspruch 17, wobei sich der Abgaskatalysator in einem Abgasrohrstück (113) befindet, das beiderseits des Abgaskatalysators Einmündungen (114; 115) aufweist, die über eine Umwegleitung miteinander verbunden sind, und wobei die Schleife (103; 203; 303) durch das Abgasrohrstück (113) und die Umwegleitung gebildet ist.

19. Vorrichtung nach Anspruch 18, wobei mindestens eine der Einmündungen (114; 115) durch eine steuerbare Klappe (116; 117) oder dergleichen verschließbar ist.

20. Vorrichtung nach einem der Ansprüche 9 bis 15, wobei die Komponente (101; 201; 301; 318) ein Wärmetauscher (301; 318) ist mit mindestens einem von dem Gasstrom durchströmbaren Heißkanal und mindestens einem Kaltkanal, der von einem Wärmeträgerfluid durchströmbar ist.

21. Vorrichtung nach Anspruch 20, wobei das Wärmeträgerfluid ein Gas ist, insbesondere Luft.

22. Vorrichtung nach Anspruch 21, wobei der Kaltkanal Teil eines Luftheizsystems ist, insbesondere eines Luftheizsystems in einem Kraftfahrzeug.

23. Vorrichtung nach Anspruch 20, wobei das Wärmeträgerfluid eine Flüssigkeit ist, insbesondere Wasser.

24. Vorrichtung nach Anspruch 23, wobei der Kaltkanal Teil eines Kühlflüssigkeitssystems in einem Kraftfahrzeug ist.

25. Vorrichtung nach einem der Ansprüche 20 bis 24, wobei der Wärmetauscher (301; 318) das erste katalytisch aktive Element (109; 209; 309) trägt.

26. Vorrichtung nach Anspruch 25, wobei der Heißkanal eine dem Gasstrom zugewandte Wandung aufweist, auf der eine katalytisch aktive Schicht aufgebracht ist.

27. Vorrichtung nach einem der Ansprüche 20 bis 26, wobei ein erster Wärmetauscher (301) in der Schleife (103; 203; 303) und ein zweiter Wärmetauscher (318) in dem Gasauslaß (105; 205; 305) angebracht ist.

28. Vorrichtung nach Anspruch 27, wobei der Kaltkanal des ersten Wärmetauschers (301) mit dem Kaltkanal des zweiten Wärmetauschers (318) kommuniziert.

## Claims

1. A process for generating heat by flame-less combustion of a fuel in a gas flow with an oxygen content, wherein
a) the gas flow flows through at least one heating device (108; 208; 308), along at least one feed device (107; 207; 307) for the fuel and along at least one first catalytically active element (109; 209; 309);
b) the gas flow is guided for a predominant part in a loop (103; 203; 303) and in so doing flows through a first conveyor device (106; 206; 306) and along the first catalytically active element (109; 209; 309);
c) a gas with oxygen content can be fed into the loop (103; 203; 303) and a part of the gas flow can be fed out of the loop (103; 203; 303); and
d) the fuel is added to the gas flow only to such an extent that the resulting fuel-gas mixture is not itself ignitable.

2. A process according to claim 1 wherein the gas flow is about 70% to about 90% guided in the loop (103; 203; 303).

3. A process according to claim 1 or claim 2 wherein when the process is started the gas flow is heated by the heating device (108; 208; 308) at least as long as the temperature of the gas flow is below the start-up temperature of the first catalytically active element (109; 209; 309).

4. A process according to claim 3 wherein no gas is fed into the loop (103; 203; 303) as long as the gas flow is being heated.

5. A process according to one of the preceding claims wherein gas is fed into the loop (103; 203; 303) only in such a way that the temperature of the gas flow, on reaching the first catalytically active element (109; 209; 309) is not below the start-up temperature thereof.

6. A process according to one of the preceding claims wherein a portion of the gas flow is fed out of the loop (103; 203; 303) when the gas pressure in the loop (103; 203; 303) exceeds a limit value.

7. A process according to one of the preceding claims wherein the generation of heat is effected with a maximum thermal output of about 10 kilowatts, in particular about 7 kilowatts, preferably about 4 kilowatts.

8. A process according to one of the preceding claims wherein the heat is introduced into at least one component (101; 201; 301; 318) around and/or through which the gas flow can flow.

9. Apparatus for generating heat by flame-less combustion of a fuel in a gas flow with an oxygen content, including a gas guide system (102; 202; 302) for guiding a gas flow, with at least one loop (103; 203; 303), a first feed device (107; 207; 307) for the feed of the fuel, a gas inlet (104; 204; 304) and a gas outlet (105; 205; 305), a first conveyor device (106; 206; 306) for maintaining the gas flow in the loop (103; 203; 303), a heating device (108; 208; 308) and a first catalytically active element (109; 209; 309), characterised in that a large part of the gas flow in the loop (103; 203; 303) forms a circulating gas flow from which gas can be fed in and out as required, and wherein a component (101; 201; 301) around and/or through which the gas flow can flow, for receiving heat, is arranged in the loop (103; 203; 303).

10. Apparatus according to claim 9 wherein a further component (318) which is intended to receive heat is arranged in the gas outlet (105; 205; 305).

11. Apparatus according to claim 9 or claim 10 wherein the first catalytically active element (109; 209; 309) is a constituent part of the heating device (108; 208; 308).

12. Apparatus according to one of claims 9 to 11 wherein the heating device (108; 208; 308) includes a heating conductor arrangement which can be supplied with an electrical current.

13. Apparatus according to one of claims 9 to 12 wherein the gas inlet (104; 204; 304) includes a second conveyor device (110) for the feed of gas into the gas flow.

14. Apparatus according to one of claims 9 to 13 wherein at least one lambda probe (111) is arranged in the loop (103; 203; 303).

15. Apparatus according to one of claims 9 to 14 wherein at least one thermocouple element (112) is arranged in the loop (103; 203; 303).

16. Apparatus according to one of claims 9 to 15 wherein the component (101; 201; 301; 318) is a second catalytically active element (101).

17. Apparatus according to claim 16 wherein the gas guide system (102; 202; 302) is in part a constituent part of an exhaust gas system for a motor vehicle and the second catalytically active element (101) is an exhaust gas catalyst in the exhaust gas system.

18. Apparatus according to claim 17 wherein the exhaust gas catalyst is disposed in an exhaust gas pipe portion (113) with on both sides of the exhaust gas catalyst intake openings (114; 115) which are connected together by way of a bypass conduit, and wherein the loop (103; 203; 303) is formed by the exhaust gas pipe portion (113) and the bypass conduit.

19. Apparatus according to claim 18 wherein at least one of the intake openings (114; 115) is closable by a controllable flap (116; 117) or the like.

20. Apparatus according to one of claims 9 to 15 wherein the component (101; 201; 301; 318) is a heat exchanger (301; 318) with at least one hot duct through which the gas flow can flow and at least one cold duct through which a heat carrier fluid can flow.

21. Apparatus according to claim 20 wherein the heat carrier fluid is a gas, in particular air.

22. Apparatus according to claim 21 wherein the cold duct is part of an air heating system, in particular an air heating system in a motor vehicle.

23. Apparatus according to claim 20 wherein the heat carrier fluid is a liquid, in particular water.

24. Apparatus according to claim 23 wherein the cold duct is part of a cooling liquid system in a motor vehicle.

25. Apparatus according to one of claims 20 to 24 wherein the heat exchanger (301; 318) carries the first catalytically active element (109; 209; 309).

26. Apparatus according to claim 25 wherein the hot duct has a wall which is towards the gas flow and on which a catalytically active layer is disposed.

27. Apparatus according to one of claims 20 to 26 wherein a first heat exchanger (301) is disposed in the loop (103; 203; 303) and a second heat exchanger (318) is disposed in the gas outlet (105; 205; 305).

28. Apparatus according to claim 27 wherein the cold duct of the first heat exchanger (301) communicates with the cold duct of the second heat exchanger (318).

## Revendications

1. Procédé pour la production de chaleur par la combustion sans flamme d'un combustible dans un courant de gaz contenant de l'oxygène, selon lequel
a) le courant de gaz circule à travers au moins un dispositif de chauffage (108 ; 208 ; 308), le long d'au moins un dispositif d'alimentation (107 ; 207 ; 307) en combustible et le long d'au moins un premier élément actif de façon catalytique (109 ; 209 ; 309)
b) une partie prépondérante du courant de gaz est conduite dans une boucle (103 ; 203 ; 303) et circule alors à travers un premier dispositif de transport (106 ; 206 ; 306) et le long du premier élément actif de façon catalytique (109 ; 209 ; 309)
c) on peut introduire dans la boucle (103 ; 203 ; 303) un gaz contenant de l'oxygène et on peut évacuer hors de la boucle (103 ; 203 ; 303) une partie du courant de gaz ;
d) le combustible est seulement mélangé avec le courant de gaz dans la mesure où le mélange combustible-gaz créé n'est pas inflammable de lui-même.

2. Procédé selon la revendication 1, selon lequel le courant de gaz est conduit dans la boucle (103 ; 203 303) dans une proportion de 70 % environ jusqu'à 90 % environ.

3. Procédé selon la revendication 1 ou 2, selon lequel, lors de la mise en route du procédé, le courant de gaz est chauffé par le dispositif de chauffage (108 ; 208 ; 308) au moins tant que la température du courant de gaz est inférieure à la température de démarrage du premier élément actif de façon catalytique (109 ; 209 ; 309).

4. Procédé selon la revendication 3, selon lequel aucun gaz n'est introduit dans la boucle (103 ; 203 ; 303) tant que le courant de gaz est chauffé.

5. Procédé selon l'une des revendications précédentes, selon lequel du gaz est introduit dans la boucle (103 ; 203 ; 303) seulement dans la mesure où la température du courant de gaz n'est pas inférieure à la température de démarrage du premier élément actif de façon catalytique (109 ; 209 ; 309) lorsque le courant de gaz atteint cet élément.

6. Procédé selon l'une des revendications précédentes, selon lequel une partie du courant de gaz est évacuée hors de la boucle (103 ; 203 ; 303) lorsque la pression de gaz dans la boucle (103 ; 203 ; 303) dépasse une valeur limite.

7. Procédé selon l'une des revendications précédentes, selon lequel la production de chaleur s'effectue à une puissance thermique maximale d'environ 10 kilowatts, notamment environ 7 kilowatts, de préférence environ 4 kilowatts.

8. Procédé selon l'une des revendications précédentes, selon lequel la chaleur est amenée dans au moins un composant (101 ; 201 ; 301 ; 318) autour duquel et/ou dans lequel peut circuler le courant de gaz.

9. Dispositif pour la production de chaleur par la combustion sans flamme d'un combustible dans un courant de gaz contenant de l'oxygène, comportant un système de conduite du gaz (102 ; 202 ; 302) destiné à conduire un courant de gaz, avec au moins une boucle (103 ; 203 ; 303), un premier dispositif d'alimentation (107 ; 207 ; 307) destiné à l'alimentation en combustible, une entrée de gaz (104 ; 204 ; 304) et une sortie de gaz (105 ; 205 ; 305), un premier dispositif de transport (106 ; 206 ; 306) destiné à maintenir le courant de gaz dans la boucle (103 ; 203 ; 303), un dispositif de chauffage (108 ; 208 ; 308) et un premier élément actif de façon catalytique (109 ; 209 ; 309),
caractérisé en ce que
une grande partie du courant de gaz forme dans la boucle (103 ; 203 ; 303) un courant circulaire de gaz dans lequel on peut à volonté introduire ou évacuer du gaz, et selon lequel un composant (101 ; 201 ; 301), autour duquel et/ou dans lequel peut circuler le courant de gaz et qui est destiné à l'absorption de chaleur, est agencé dans la boucle (103 ; 203 ; 303).

10. Dispositif selon la revendication 9, selon lequel un autre composant (318) destiné à l'absorption de chaleur est agencé dans la sortie de gaz (105 ; 205 ; 305).

11. Dispositif selon la revendication 9 ou 10, selon lequel le premier élément actif de façon catalytique (109 ; 209 ; 309) fait partie du dispositif de chauffage (108 ; 208 ; 308).

12. Dispositif selon l'une des revendications 9 à 11, selon lequel le dispositif de chauffage (108 ; 208 ; 308) comporte un dispositif conducteur de chaleur qui peut être alimenté par un courant électrique.

13. Dispositif selon l'une des revendications 9 à 12, selon lequel l'entrée de gaz (104 ; 204 ; 304) contient un second dispositif de transport (110) destiné à l'alimentation en gaz du courant de gaz.

14. Dispositif selon l'une des revendications 9 à 13, selon lequel on agence dans la boucle (103 ; 203 303) au moins une sonde lambda (111).

15. Dispositif selon l'une des revendications 9 à 14, selon lequel on agence dans la boucle (103 ; 203 303) au moins un thermocouple (112).

16. Dispositif selon l'une des revendications 9 à 15, selon lequel le composant (101 ; 201 ; 301 ; 318) est un second élément actif de façon catalytique (101).

17. Dispositif selon la revendication 16, selon lequel le système de conduite du gaz (102 ; 202 ; 302) est une partie constituante d'un système de gaz d'échappement pour un véhicule automobile et le second élément actif de façon catalytique (101) est un catalyseur de gaz d'échappement dans le système de gaz d'échappement.

18. Dispositif selon la revendication 17, selon lequel le catalyseur de gaz d'échappement se trouve dans un tronçon du conduit de gaz d'échappement (113) qui comporte de chaque côté du catalyseur de gaz d'échappement des orifices (114 ; 115) qui sont reliés entre eux par une conduite déviée, et selon lequel la boucle (103 ; 203 ; 303) est formée par le tronçon du conduit de gaz d'échappement (113) et par la conduite déviée.

19. Dispositif selon la revendication 18, selon lequel au moins un des orifices (114 ; 115) peut être fermé par un clapet, ou équivalent, (116 ; 117) qui peut être commandé.

20. Dispositif selon l'une des revendications 9 à 15, selon lequel le composant (101 ; 201 ; 301 ; 318) est un échangeur de chaleur (301 ; 318) avec au moins un canal chaud autour duquel peut circuler le courant de gaz et au moins un canal froid dans lequel peut circuler un fluide caloporteur.

21. Dispositif selon la revendication 20, selon lequel le fluide caloporteur est un gaz, en particulier de l'air.

22. Dispositif selon la revendication 21, selon lequel le canal froid est une partie d'un système de chauffage par air, notamment un système de chauffage par air dans un véhicule automobile.

23. Dispositif selon la revendication 20, selon lequel le fluide caloporteur est un liquide, notamment de l'eau.

24. Dispositif selon la revendication 23, selon lequel le canal froid est une partie du système de liquide de refroidissement dans un véhicule automobile.

25. Dispositif selon l'une des revendications 20 à 24, selon lequel l'échangeur de chaleur (301 ; 318) porte le premier élément actif de façon catalytique (109 ; 209 ; 309)

26. Dispositif selon la revendication 25, selon lequel le canal chaud comporte une paroi tournée vers le courant de gaz et sur laquelle est apposée une couche active de façon catalytique.

27. Dispositif selon l'une des revendications 20 à 26, selon lequel un premier échangeur de chaleur (301) est disposé dans la boucle (103 ; 203 ; 303) et un second échangeur de chaleur (318) est disposé dans la sortie de gaz (105 ; 205 ; 305).

28. Dispositif selon la revendication 27, selon lequel le canal froid du premier échangeur de chaleur (301) communique avec le canal froid du second échangeur de chaleur (318).
